# EUROPÄISCHE PATENTSCHRIFT

(11) **EP 3 372 872 B1**
(45) Veröffentlichungstag und Bekanntmachung des Hinweises auf die Patenterteilung: **29.04.2020**
(21) Anmeldenummer: 17001978.0
(22) Anmeldetag: 04.12.2017
(51) Int. Cl.: F16H 61/18, F16H 3/083, F16H 63/04, F16H 63/30

(54) **MEHRSTUFIGES LASTSCHALTGETRIEBE, VORZUGSWEISE FÜR FAHRZEUGE MIT FUSSSCHALTUNG**
MULTI-STAGE POWERSHIFT TRANSMISSION, PREFERABLY FOR VEHICLES WITH FOOT SWITCHING
BOÎTE DE VITESSES COUPABLE SOUS CHARGE À PLUSIEURS ÉTAPES, DE PRÉFÉRENCE POUR VÉHICULES POURVUS DE COMMANDE À PIED

(30) Priorität: 25.08.2017 DE 102017008376; 06.12.2016 DE 102016014482
(43) Veröffentlichungstag der Anmeldung: 12.09.2018
(73) Patentinhaber: Karrenberg, Jürgen, 82377 Penzberg (DE)
(72) Erfinder: Karrenberg, Jürgen, 82377 Penzberg (DE)

(56) Entgegenhaltungen:
- EP-A1- 2 065 606
- JP-A- 2017 032 050
- US-A- 1 223 862
- US-A- 5 109 722

## Beschreibung

Die Erfindung betrifft ein mehrstufiges Lastschaltgetriebe, bei dem die Gänge ohne Unterbrechung der Antriebskraft hochgeschaltet werden können.

Die US2011/0023639A1, EP2065606A1, JP2017-32050, US5109722 und US1223862 offenbaren jeweils ein Getriebe mit mehreren Gängen, die mittels Sperrklinken geschaltet werden.

Die Erfindung ist in Anspruch 1 angegeben. Die abhängigen Ansprüche beziehen sich auf besondere Ausführungsarten der Erfindung.

Vorteile der Erfindung: Vermeidung der Kraftunterbrechung und anschließender erneuten Beschleunigung, wodurch Verbrauch und CO₂ - Ausstoß reduziert werden. Im Rennsport steht die drastische Verkürzung der Schaltzeit an erster Stelle
Das Getriebe wurde mit 6 Gängen für Fahrzeuge mit Fußschaltung konzipiert. Ein Einsatz in anderen Kraftfahrzeugen ist ebenfalls möglich, wobei die Zahl der Gänge geändert werden kann.

### 1). Aufbau und Funktion

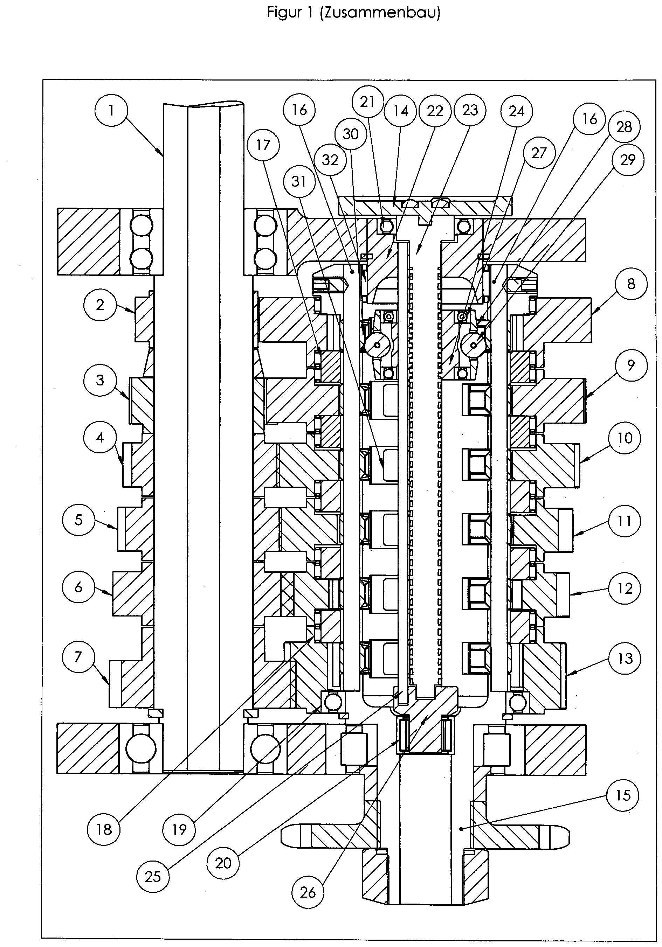

Wie beim Ziehkeilgetriebe sind die Zahnräder auf beiden Wellen nebeneinander angeordnet und laufen ständig mit. Auf der Antriebswelle (1) sind die Zahnräder (2-7) aufgepresst, während die Zahnräder (8- 13) auf der Abtriebswelle (15) lose auf Gleit- oder Wälzlagern laufen. (siehe Figur 1.) Das Einlegen *eines* Ganges erfolgt durch die Verbindung zwischen Ab triebswelle (15) und dem Gangrad. Diese wird in *jedem* Gang durch zwei gegenüber liegende Sperrklinken (30) hergestellt, welche möglichst weit außen in der großdimensionierten Abtriebswelle (15) gelagert sind. Deren Vorderseiten (a) werden beim Schalten durch die Heberollen der Schalteinheit hoch gedrückt und greifen in die innenliegenden Aussparungen des Gangrades ein. Das angetriebene Zahnrad (8-13) drückt auf die Stirnseite (a) der Sperrklinken, welche die Antriebskraft über deren Drehpunkt auf die Abtriebswelle und somit auf das Kettenritzel übertragen. Die wesentlich geringeren Kräfte im Schubbetrieb werden von einer Stirnfläche (b) auf der Rückseite des vorderen Sperrklinkenprofils (30) aufgenommen.

### 2). Form der Sperrklinken

Wie aus Figur 3 und 4 (2 = Leerlaufstellung) ersichtlich, haben die Sperrklinken (30) am vorderen Teil eine Stirnfläche "a" zur Aufnahme der Antriebskraft und eine Fläche "b", auf die die Schubkraft wirkt.. Bei fehlendem Platz kann eine Vergrößerung durch eine runde stirnseitige Form erfolgen lt. Figur 5. Diese Ausführung hat auch den Vorteil, dass unter Last eine stets gleichbleibende Fixierung in der Zahnradaussparung erfolgt. Somit erfolgt kein Druck auf die Schalteinheit und die Sperrklinken (30) können erst zurückfahren, wenn der nächsthöhere Gang eingelegt ist. Die Rückseite der Sperrklinke (30a) ist relativ lang ausgebildet, welche drei Funktionen hat:

### 2.1. als Gegengewicht

2.2. als Anschlag. Die Oberseite der Rückseite der Sperrklinke (30a) ist in Null-Stellung bündig mit der Außenseite der Abtriebswelle (15). Sie liegt am Innendurchmesser des aufgeschobenen Lagerringes an, der an diesen zwei Stellen übersteht. Dadurch ist stets eine korrekte Null-Stellung gewährleistet.

### 2.3. Als Sicherung gegen versehentliches zurückschalten unter Volllast.

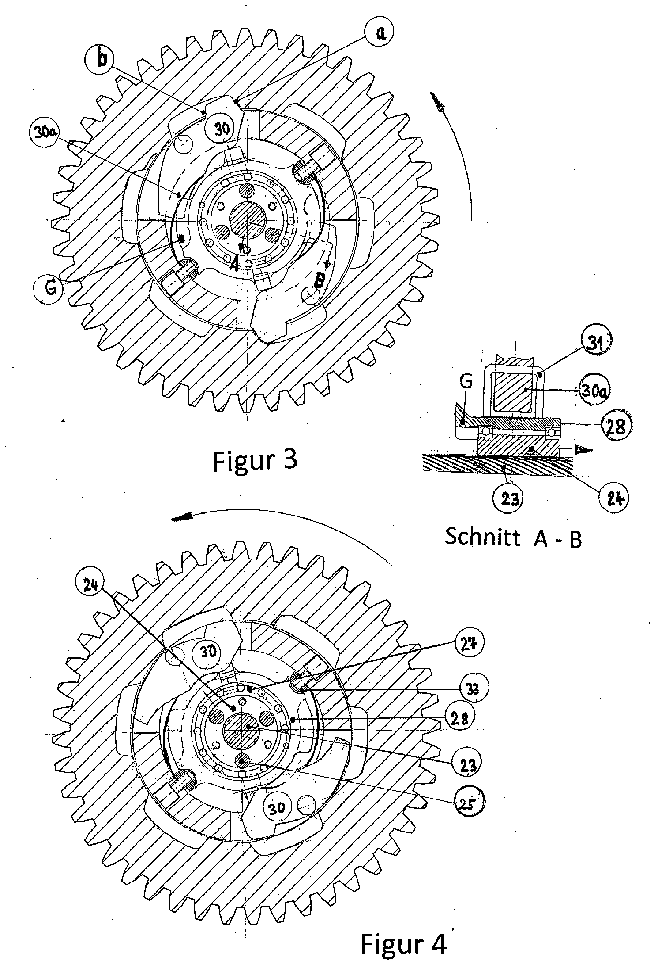

Bei einem Standard - Getriebe ist ein Runterschalten unter Volllast nicht möglich, weil die Hinterschneidung der Schaltklauen dies verhindert. Anders beim Lastschaltgetriebe: Wenn ein Gang eingelegt ist, könnte irrtümlich heruntergeschaltet werden. Dann wären gleichzeitig zwei Gänge eingelegt mit den Folgen einer Blockade. Dies muss 100%ig ausgeschlossen werden. Es wurde deshalb eine Lösung lt. Figur 3 und Schnitt A - B entwickelt, welche sich die Stellung der Sperrklinken (30a) zunutze macht. Am Außenring der Schalteinheit (28) sind zwei Erhöhungen mit einer Schräge (G) angebracht, welche beim Herunterschalten (siehe Pfeil im Schnitt A - B) zuletzt unter der Rückseite der Sperrklinken (30a) durchfahren, sofern der höhere Gang ausgerückt wurde. Ist dies nicht der Fall, stehen die Rückseiten der Sperrklinken (30a) den Erhöhungen (G) im Weg mit der Folge, dass die Schalteinheit nicht weiterrücken und somit den niedrigeren Gang nicht einschalten kann. Damit ist eine absolute Sicherheit gegen Blockieren gegeben.

### 3) Lagerung der Sperrklinken (30)

Diese sitzen auf Stiften (16), die entweder geteilt sind oder durchgehend alle Sperrklinken(30) der jeweiligen Seite aufnehmen. Die Stifte (16) werden in die passende Bohrung eingeschoben, welche die ganze Länge der Abtriebswelle (15) durchzieht. Da solche Tieflochbohrungen sehr aufwendig sind, können alternativ zwei Längsnuten an der Abtriebswellen - Außenseite eingefräst werden. Dann werden die Lagerstifte (16) außen von aufgeschobenen Lagerringen (17) gehalten, (siehe auch Abschnitt 5).

### 4). Art und Anordnung der Rückholfedern (31)

Der Einbau von Rückholfedern, (31) welche die Sperrklinken (30) in der Null - Stellung halten, ist äußerst schwierig, weil dafür kaum Platz vorhanden ist. Eine Druckfeder im hinteren Teil der Sperrklinken (30a) scheidet aus, da die Abtriebwelle (15) nach innen offen ist und somit ein Gegenlager fehlt. Es wurden daher dünne Federstahl - Platinen (31 ,31a + 31b) vorgesehen, welche hinter die eingeschraubten Schienen (33) eingeschoben und verklemmt werden. Es gibt drei Möglichkeiten: Die erste ist in Figur 3 - 5 und 7 dargestellt. Dabei hat die Platine (31) eine Aussparung, in der sich die Rückseite der Sperrklinke (30a) frei bewegen kann. Mit der oberen Querstrebe drückt sie diese nach oben, wodurch deren Vorderteil in die Null - Stellung gedrückt wird.

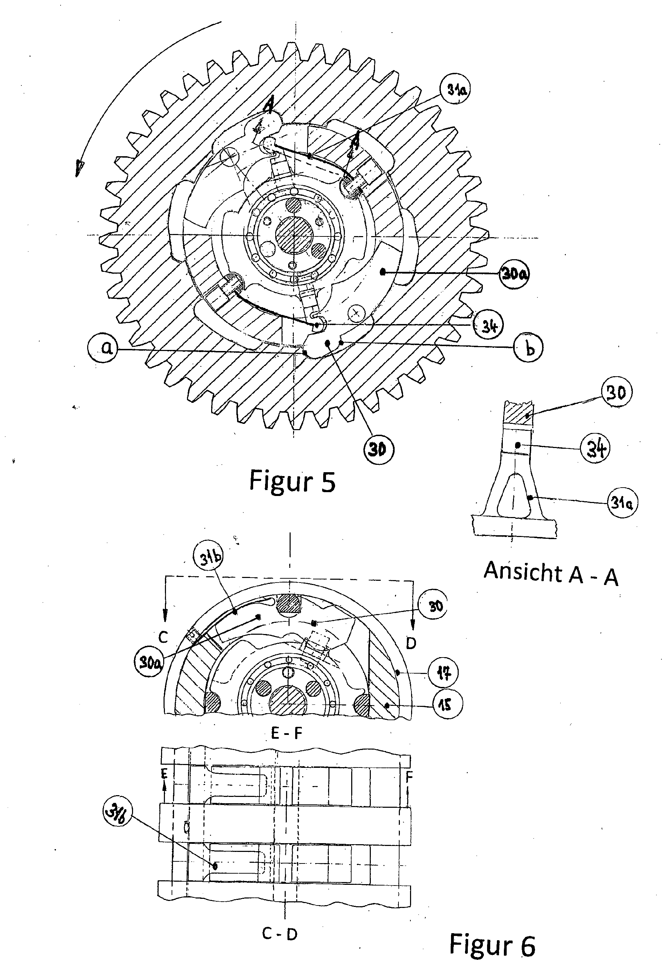

Zur Vermeidung der auftretenden Seitenkraft und evtl. Schwergängigkeit der Sperrklinken (30) kann die Lösung lt. Figur 5 und Ansicht A - A eingesetzt werden. Dabei wird die Federplatine (31a) nach unten gebogen, bevor sie festgeklemmt wird. An deren Vorderseite wird ein Zwischenstück (34) aufgesetzt, welches stirnseitig halbrund ist und direkt in die entsprechende Aussparung der Sperrklinke (30) eingreift, wodurch diese in die Null - Stellung runter gedrückt wird. Die Federplatine (31a) verbreitert sich schräg nach unten lt. Figur 5, Ansicht A - A. Dadurch kann sie die Seitenkräfte problemlos aufnehmen, ohne die Sperrklinke (30) damit zu belasten. Als weiteren Vorteil ist die Montage der Sperrklinken (30) recht einfach; diese können von außen direkt über das Zwischenstück (34) geschoben werden.

Eine weitere Lösung ist in Figur 6 dargestellt. Dabei werden die "Füße" der Federplatinen (31b) auf zwei Flächen aufgelegt, die sich am Rand der Sperrklinken - Aussparungen der Abtriebswelle (15) befinden. Die Fixierung erfolgt durch eine Verbindung in den aufgeschobenen Lagerringen (17). Die Zungen der Federplatinen (31b) liegen auf den Rückseiten der Sperrklinken (30a) auf und ragen mit den Enden in deren runde Aussparung hinein, wodurch dieser Teil nach oben gedrückt wird und den vorderen Teil unten, d. h. exakt in der Null - Stellung hält. Vorteil: Ein zusätzlicher Anschlag für die Null - Stellung an den aufgeschobenen Ringen (17) kann entfallen.

### 5). Form der Zahnräder und deren Lagerung auf der Abtriebswelle

Die Zahnräder (8-13) der Abtriebswelle (15) sind ringförmig konzipiert. Sie haben innen sechs oder mehr Aussparungen, (siehe Figur 3-5, 7+8), in welche die Sperrklinken eingreifen. Dadurch wird die Verbindung zwischen Zahnrad (8-13) und Abtriebswelle (15) hergestellt. Auf beiden Seiten der Aussparungen ist eine Fläche zur beidseitigen Lagerung des Gangrades vorgesehen, welche etwas größer als die Aussparungen sein sollten. Der Grund: In den Aussparungen sammelt sich durch die Fliehkraft Öl, welches dann seitlich durch die vorgesehenen Nadellagerung (18) abfließen kann, die so hervorragend geschmiert werden.. Innen laufen sie auf Ringen (17), die auf die Abtriebswelle (15) aufgeschoben und axial fixiert werden, wodurch die Abtriebsräder (8-13) ebenfalls axial gesichert sind. Falls das Getriebe bei Motoren mit relativ niedrigen Drehzahlen eingesetzt wird, ist auch eine Gleitlagerung möglich.

### 6). Der Schaltantrieb (mechanisch)

Das übliche Fußschaltsystem kann bis zum Schaltstern, der jeweils um 60° weiter bewegt wird, beibehalten werden. Auf den Schaltstern wird ein Zahn- oder Kettenrad montiert, welches über eine Übersetzung ein außen an der Abtriebswelle (30) vorstehendes Antriebsrad (14) antreibt.

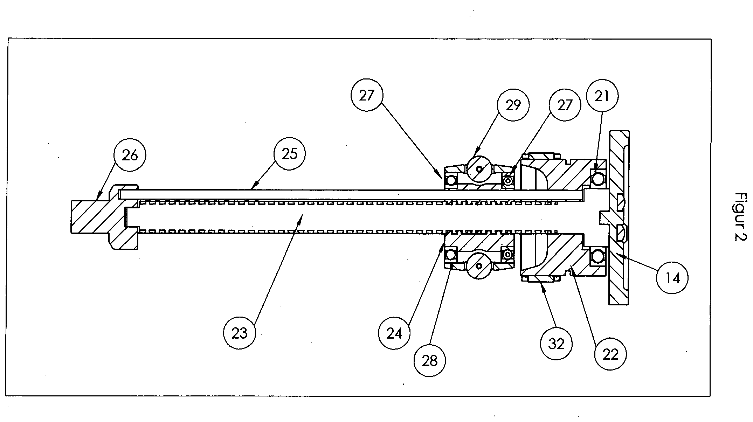

### 7). Das Schaltsystem (Figur 2)

ist in die Abtriebswelle (15) integriert und muss daher sehr klein gehalten werden. Es besteht aus einem feststehenden Grundkörper und der axial verschiebbaren Schalteinheit. Der Grundkörper ist ein Stopfen (22), dessen eine Seite anstelle des bisher üblichen Nadellagers in die Bohrung des Getriebegehäuses eingelegt wird. Er ragt in die Abtriebswelle (15) hinein und dient dort als Innenlauffläche eines Nadellagers (32), welches in die Innenseite der Abtriebswelle (15) eingepresst ist. Der Stopfen (22) enthält ein Kugellager (21), welches eine Welle mit Steilgewinde (23) mit 20-60 mm Steigung aufnimmt, die über das Antriebsrad (14) angetrieben wird. Weil der Schaltstern nur jeweils um 60° bewegt wird, ergäbe das bei 50 mm Steigung nur einen Schaltweg von 8.33 mm. Deshalb ist eine entsprechende Übersetzung erforderlich, damit eine ausreichende Verschiebung entsprechend den Mittenabständen der Gangräder erreicht wird.

In den Stopfen (22) werden lange, dünne Stifte (25) eingepresst - zweckmäßigerweise drei Stück, welche als Gegenlager für die Steilgewindemutter (24) (mit entspr. Axial - Bohrungen), dienen. An deren Enden wird ein Stopfen (26) aufgepresst, in dem innen die Gewindewelle lagert. Auf der anderen Seite des Stopfens (26) befindet sich ein Zapfen, der in ein Nadellager (20) hineinragt, welches in die Abtriebswelle (15) eingepresst ist. Somit rotiert diese um den Zapfen und dient gleichzeitig als dessen Lagerung,(siehe Figur 1).

### 8). Die Schalteinheit (siehe Figur 2)

Sie besteht aus der Mutter (24) und einen Außenring (28) mit zwei Erhöhungen (G-Fig.3) . Dazwischen sind ein oder mehrere Kugellager (27) montiert, um die axiale Bewegung der Mutter (24) zusätzlich in eine drehende umzusetzen. Der Außenring (28) hat zwei halbkreisförmige Aussparungen, welche in zwei in der Abtriebswelle (15) innen montierte, von außen verschraubte Schienen (33) eingreifen. Dadurch läuft dieser Außenring (28) auch bei axialer Verschiebung stets mit der Abtriebswelle (15) synchron. Ferner sind in diesem Außenring (28) zwei Röllchen (29) gelagert, die höher sind und die Sperrklinken (30) über eine Schräge von der Seite her voll anheben, sobald sie mittig unter den Sperrklinken (30) stehen.

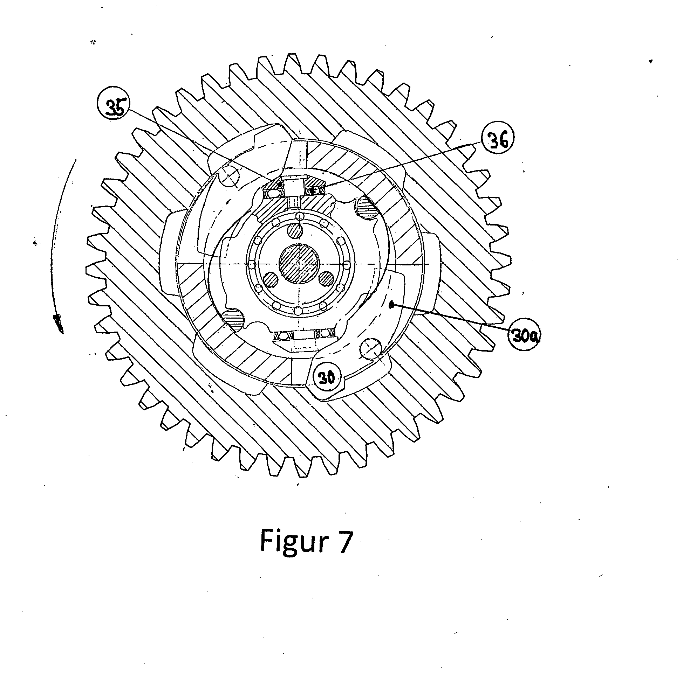

Wie in Figur 7 dargestellt, kann die Anhebung auch durch zwei konische Scheiben (35) erfolgen, die drehbar auf kleinen Axiallagern (36) laufen.

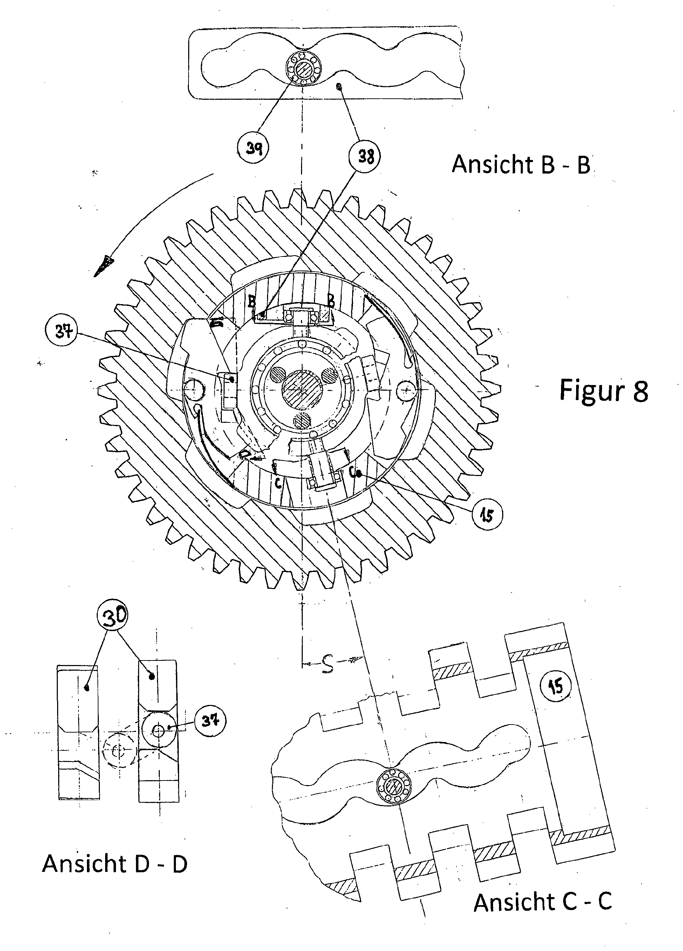

Eine weitere Lösung wird in Figur 8 gezeigt. Sie ermöglicht es, dass die Schalteinheit bei axialer Verschiebung kleine Schwenkbewegungen macht, die zur Anhebung der Sperrklinken (30) genutzt werden. Auf den Außenring (28) werden zwei Röllchen (37) montiert, welche die Sperrklinken (30) unterhalb deren Drehpunkte angreifen und hoch drücken. Ermöglicht wird dies dadurch, dass statt der Führungsschienen (33) zwei Profilleisten mit Kurvenbahnen (38) montiert werden, in denen je ein Mini-Kugellager (39) läuft. Alternativ können die Kurvenbahnen auch direkt in die Abtriebswelle (15) eingefräst werden, wie im unteren Teil der Figur 8 dargestellt. Auf der linken Seite wird die Position bei eingeschaltetem Gang gezeigt, während rechts die Leerlaufstellung zu sehen ist. "S" bezeichnet den Schwenkbereich. Die Ansicht D - D zeigt die Form der Sperrklinken (30) von unten und den Weg der Röllchen (37).

### 9). Antrieb der Schaltung durch einen elektrischen Stellmotor

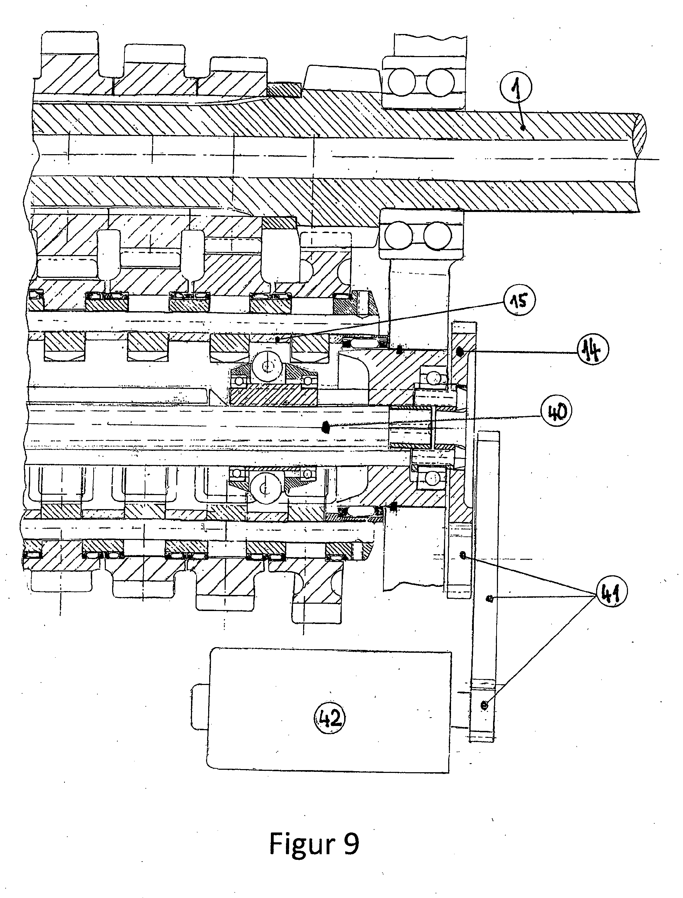

Das Schaltsystem ist das gleiche wie das mechanische. Statt der Steilgewindespindel kommt eine Welle mit Normal- oder Trapezgewinde (40) zum Einsatz. Sie wird über eine starke Untersetzung (41) von einem Stellmotor (42) angetrieben, (siehe Figur 9). Auf dem Schaltstern werden Kontakte montiert, welche über die Elektronik die Steuerbefehle an den Stellmotor (42) weitergeben. Bei dieser Antriebsart ist es auch möglich, auf die Fußschaltung zu verzichten und die Schaltung vom Lenker oder Steuerrad aus zu aktivieren. Durch Einsatz eines Drehmomentsensors ist es sogar denkbar, dass automatisch geschaltet wird oder wahlweise beides möglich ist. Diese Lösung bietet sich vorzugsweise für PKWs oder andere Kfz an.

### Bezugsverzeichnis

- 1: Antriebswelle
- 2-7: Zahnräder auf der Antriebswelle
- 8-13: Zahnräder auf der Abtriebswelle
- 14: Antriebsrad für Gewindespindel
- 15: Abtriebswelle
- 16: Lagerstifte für die Sperrklinken
- 17: Lagerringe
- 18: Nadellagerung
- 19: Kugellager
- 20: Nadellager
- 21: Kugellager für Lagerung Gewindespindel
- 22: Lagerstopfen für Schaltmechanismus
- 23: Gewindespindel mit Steilgewinde
- 24: Gewindemutter mit Steilgewinde
- 25: Führungsstifte für (24)
- 26: Lagerstopfen
- 27: Kugellager
- 28: Außenring (läuft synchron mit Abtriebswelle)
- 29: Heberöllchen für die Sperrklinken
- 30/30a: Sperrklinken/Rückseite
- 31,.31a,31b: Federplatinen
- 32: Nadellager für Abtriebswelle
- 33: Führungsschienen für (28)
- 34: Zwischenstück für (31a)
- 35: Konusscheibe
- 36: Axial - Wälzlager
- 37: Röllchen zur Anhebung der Sperrklinken
- 38: Profilleiste
- 39: Mini - Kugellager
- 40: Gewindespindel mit metr. /Trapezgewinde
- 41: Untersetzung
- 42: elektr. Stellmotor
- G: Schräge
- a: Stirnfläche zur Aufnahme der Antriebskraft
- b: Stirnfläche zur Aufnahme der Schubkraft

## Patentansprüche

1. Lastschaltgetriebe mit mehreren Gängen, für Fahrzeuge mit Fußschaltsystemen, bei dem ein Hochschalten unter Last, also ohne Kraftunterbrechung, möglich ist, wobei das Lastschaltgetriebe eine Antriebswelle (1) und darauf fest montierte Antriebswellenzahnräder (2-7) aufweist und wobei das Lastschaltgetriebe eine Abtriebswelle (15) aufweist, auf der Abtriebswellenzahnräder (8-13) auf aufgeschobenen Lagerringen (17) lose laufen, welche gleichzeitig die Abtriebswellenzahnräder (8-13) axial fixieren, wobei das Einlegen eines Ganges durch die Verbindung eines lose laufenden Abtriebswellenzahnrads (8-13) mit der Abtriebswelle (15) mittels zwei aus der Welle ausfahrender Sperrklinken (30) erfolgt, welche in entsprechende Aussparungen der Abtriebswellenzahnräder eingreifen, wobei mit jeder der Sperrklinken (30) Schub und Antrieb übertragen werden kann und jede der Sperrklinken (30) jeweils eine Stirnseite (a) zur Aufnahme der Antriebskraft und gegenüberliegend eine Stirnseite (b) zur Aufnahme der Schubkraft hat, wobei die Stirnseite (a) zur Aufnahme der Antriebskraft eine derart gerade oder runde stirnseitige Form aufweist, dass unter Last eine stets gleichbleibende Fixierung der jeweiligen Sperrklinke (30) in der Aussparung des jeweiligen Abtriebszahnrads (8-13) erfolgt, so dass kein Druck auf die Schalteinheit erfolgt und dass die Sperrklinken (30) erst zurückfahren können, wenn der nächst höhere Gang eingelegt ist.

2. Getriebe nach Anspruch 1, wobei die Sperrklinken (30) durch eine Schalteinheit angehoben werden, die axial durch eine von außen angetriebene Welle mit Steilgewinde (23) bewegt wird, welche von einem Schaltstern über eine Übersetzung angetrieben wird, wobei die Schalteinheit aus der Gewindemutter (24) und einem Außenring (28) besteht und dazwischen ein oder zwei Kugellager (27) montiert sind, um die axiale in eine Drehbewegung umzusetzen, wobei der Außenring (28) synchron mit der Abtriebswelle (15) läuft, aber axial verschoben werden kann und wobei der Außenring zwei Röllchen (29) oder axial gelagerte konische Scheiben (35) enthält, welche über Schrägen die Sperrklinken (30) voll anheben, sobald sie mittig unter den Sperrklinken (30) stehen.

3. Getriebe nach Anspruch 1 oder 2, wobei die Schalteinheit außer der axialen Verschiebung gleichzeitig eine Schwenkbewegung macht, welche zur Anhebung der Sperrklinken (30) unterhalb deren Drehpunkte genutzt werden und wobei die Schwenkbewegung durch Kurvenbahnen gesteuert wird, die entweder in eingeschraubten Profilleisten (38) enthalten oder direkt in die Abtriebswelle (15) gefräst sind.

4. Getriebe nach einem der vorigen Anspruche, wobei der Außenring (28) der Schalteinheit zwei Erhöhungen mit einer Schräge (G) hat, die ein Runterschalten verhindern, solange der höhere Gang noch nicht ausgerückt ist.

5. Getriebe nach einem der vorigen Anspruche, wobei die Schalteinheit in einem "Käfig" gleitet, der aus drei langen Stiften (25) besteht, die auch als Gegenhalter für die Gewindemutter (24) dienen, sowie einem am Ende aufgepressten Abschlusstopfen (26), in dem das Ende der Gewindestange gelagert ist, während der Abschlussstopfen auf der Gegenseite mit seinem Zapfen in einem Nagellager (20) der Abtriebswelle (15) gelagert ist.

6. Getriebe nach einem der vorigen Anspruche, wobei als Rückholfedern wegen Platzmangel Platinen (31) aus dünnem Federstahl vorgesehen sind, welche mit den Führungsleisten in der Welle verschraubt werden, welche die Rückseiten der Sperrklinken (30) nach oben drücken, wodurch die Sperrklinken in Null - Stellung zurückfahren oder als alternative Lösung die Positionierung vor der Sperrklinke (30) gewählt wird, wobei jeweils eine Platine (31a) die Sperrklinke (30) nach unten drückt, wobei an deren Stirnseite ein Zwischenstück (34) sitzt, welches die Seitenkräfte der Schalteinheit aufnimmt und direkt in die Sperrklinke (30) eingreift, oder wobei die Platinen (31b) auf zwei seitlichen Flächen der Abtriebswelle (15) gelagert sind und durch eine Verbindung in den aufgeschobenen Lagerringen (17) fixiert werden, deren Zungen auf den Rücken des hinteren Teils der Sperrklinken (30a) aufliegen und in eine runde Öffnung eingreifen, wobei diese nach oben gedrückt wird, als Anschlag fungiert und den vorderen Teil in der Null-Stellung hält.

7. Getriebe nach einem der vorigen Anspruche, wobei die Gewindewelle (23) anstelle des Steilgewindes ein Normal - oder Trapezgewinde hat (40), wobei der Antrieb über eine Untersetzung (41) durch einen elektrischen Stellmotor (42) erfolgt, der über entsprechende Kontakte von der Elektronik angesteuert wird, wobei insbesondere statt einer Fußschaltung auch ein Gangwechsel am Lenker oder Lenkrad erfolgen kann.

8. Getriebe nach Anspruch 7, wobei ein Drehmomentsensor eingebaut wird und in Verbindung mit der Elektronik auch wahlweise ein automatisches Schalten möglich ist.

## Claims

1. Powershift transmission with several gears, for vehicles with foot shift systems, in which an upshift under load, i.e. without power interruption, is possible, the powershift transmission having a drive shaft (1) and drive shaft gearwheels (2-7) fixedly mounted thereon, and the powershift transmission having an output shaft (15), on which output shaft gearwheels (8-13) run loosely on pushed-on bearing rings (17) which simultaneously axially fix the output shaft gearwheels (8-13), wherein a gear is engaged by connecting a loosely running output shaft gearwheel (8-13) to the output shaft (15) by means of two pawls (30) extending out of the shaft, which engage in corresponding recesses of the output shaft gears (8-13), wherein thrust and drive can be transmitted with each of the pawls (30) and each of the pawls (30) has a respective end face (a) for absorbing the drive force and, opposite one another, a respective end face (b) for absorbing the drive force, the end face (a) having a straight or round end face shape for absorbing the drive force in such a way that the respective pawl (30) is always fixed in the recess of the respective output gearwheel (8-13) in a constant manner under load, so that there is no pressure on the switching unit and the pawls (30) cannot travel back until the next higher gear has been engaged.

2. Transmission according to claim 1, wherein the pawls (30) are raised by a shift unit which is moved axially by an externally driven shaft with a steep thread (23) which is driven by the shift star via a transmission, wherein the shift unit consists of the threaded nut (24) and an outer ring (28) and one or two ball bearings (27) are mounted between them, for converting the axial one into a rotary movement, wherein the outer ring (28) runs synchronously with the output shaft (15), but can be displaced axially, and wherein the outer ring contains two small rollers (29) or axially mounted conical discs (35) which raise the pawls (30) fully via inclines as soon as they are centrally under the pawls (30).

3. Transmission according to claim 1 or 2, in which, in addition to the axial displacement, the shift unit simultaneously makes a pivoting movement which is used to raise the pawls (30) below their pivot points and in which the pivoting movement is controlled by cam tracks which are either contained in screwed-in profile strips (38) or are milled directly into the output shaft (15).

4. Transmission according to one of the previous claims, the outer ring (28) of the shift unit having two elevations with a slope (G) which prevent downshifting as long as the higher gear has not yet been disengaged.

5. Transmission according to one of the previous claims, the shift unit sliding in a "cage" consisting of three long pins (25) which also serve as counter-bearings for the threaded nut (24), and of an end plug (26) which is pressed on at the end and in which the end of the threaded rod is mounted, while the end plug is mounted on the opposite side with its pin in a needle bearing (20) of the output shaft (15).

6. A transmission according to one of the previous claims, wherein plates (31) made of thin spring steel are provided as return springs due to lack of space, which plates are screwed to the guide rails in the shaft, which press the rear sides of the pawls (30) upwards, whereby the pawls return to the zero position or, as an alternative solution, the positioning in front of the pawl (30) is selected, wherein in each case one plate (31a) presses the pawl (30) downwards, an intermediate piece (34) being seated at its end face, which receives the lateral forces of the switching unit and engages directly in the pawl (30), or wherein the plates (31b) are mounted on two lateral surfaces of the output shaft (15) and are fixed by a connection in the pushed-on bearing rings (17), the tongues of which rest on the back of the rear part of the pawls (30a) and engage in a round opening, the latter being pressed upwards, acting as a stop and holding the front part in the zero position.

7. A transmission according to one of the previous requirements, wherein the threaded shaft (23) has a normal or trapezoidal thread (40) instead of the steep thread, wherein the drive is effected via a reduction ratio (41) by an electric servomotor (42) which is controlled by the electronics via corresponding contacts, wherein, in particular, a gear change can also take place on the handlebar or steering wheel instead of a foot switch.

8. Transmission according to claim 7, wherein a torque sensor is installed and, in conjunction with the electronics, automatic shifting is also optionally possible.

## Revendications

1. Transmission Powershift à plusieurs rapports, pour les véhicules équipés de systèmes de changement de vitesse commandés au pied, permettant de passer aux vitesses supérieures sous charge, c'est-à-dire sans interruption de la puissance ; la transmission Powershift présentant un arbre d'entraînement (1) et des roues dentées d'arbre d'entraînement (2-7) montées de manière fixe sur celui-ci, et la transmission Powershift présentant un arbre de sortie (15) sur lequel des roues dentées d'arbre de sortie (8-13) se déplacent librement sur des bagues de palier (17) qui sont enfilées et qui fixent en même temps les roues dentées d'arbre de sortie (8-13) axialement ; l'engagement d'une vitesse s'effectuant en reliant une roue dentée d'arbre de sortie (8-13) tournant librement à l'arbre de sortie (15) au moyen de deux cliquets de blocage (30) dépassant de l'arbre, qui s'engagent dans des évidements correspondants des roues dentées de l'arbre de sortie (8-13), la poussée et l'entraînement pouvant être transmis au moyen de chacun des cliquets (30) et chacun des cliquets (30) présentant une face frontale (a) pour absorber la force d'entraînement et, à l'opposé de celle-ci, une face frontale (b) pour absorber la force de poussée ; la face frontale (a) ayant une forme droite ou ronde pour absorber la force d'entraînement de telle sorte que, sous charge, le cliquet respectif (30) est toujours fixé dans l'évidement de la roue dentée de sortie respective (8-13) d'une manière constante, de sorte qu'il n'y a aucune pression sur l'unité de changement de vitesse et que les cliquets (30) ne peuvent revenir que lorsque le rapport supérieur suivant est engagé.

2. Transmission selon la revendication 1, dans laquelle les cliquets de blocage (30) sont soulevés par une unité de changement de vitesse qui est déplacée axialement par un arbre entraîné extérieurement avec un filetage à pas rapide (23) qui est entraîné par l'étoile de changement de vitesse par l'intermédiaire d'un rapport de transmission, l'unité de changement de vitesse étant constituée de l'écrou fileté (24) et d'une bague extérieure (28) et un ou deux roulements à billes (27) étant montés entre ceux-ci, pour transformer le mouvement axial en un mouvement de rotation, la bague extérieure (28) étant synchrone avec l'arbre de sortie (15), mais pouvant être déplacée axialement, et la bague extérieure contenant deux petits rouleaux (29) ou disques coniques (35) montés axialement qui soulèvent complètement les cliquets (30) par des inclinaisons dès qu'ils sont positionnés au centre sous les cliquets (30).

3. transmission selon la revendication 1 ou 2, dans laquelle, en plus du déplacement axial, l'unité de changement de vitesse effectue simultanément un mouvement de pivotement qui sert à soulever les cliquets (30) en-dessous de leurs points de pivotement et dans laquelle le mouvement de pivotement est commandé par des trajectoires de came qui sont soit contenues dans des bandes profilées vissées (38) soit fraisées directement dans l'arbre de sortie (15).

4. Transmission selon l'une des revendications précédentes, la bague extérieure (28) de l'unité de changement de vitesse présentant deux élévations avec une inclinaison (G) qui empêchent le rétrogradage tant que la vitesse supérieure n'est pas encore désengagée.

5. Transmission selon l'une des revendications précédentes, l'unité de changement de vitesse coulissant dans une « cage » constituée de trois longues broches (25) qui servent également de contre-paliers pour l'écrou fileté (24), et d'un bouchon d'extrémité (26) pressé sur l'extrémité, dans lequel est fixée l'extrémité de la tige filetée, tandis que le bouchon d'extrémité est supporté sur le côté opposé avec son axe dans un roulement à aiguilles (20) de l'axe de sortie (15).

6. Transmission selon l'une des revendications précédentes, dans laquelle de minces plaques (31) en acier à ressorts sont prévues comme ressorts de rappel par manque de place, ces plaques étant vissées sur les rails de guidage dans l'arbre, ces rails poussant les faces arrière des cliquets (30) vers le haut, les cliquets revenant ainsi à la position zéro, ou bien, comme solution alternative, on choisit le positionnement devant le cliquet (30), dans laquelle une plaque (31a) pousse chaque fois le cliquet (30) vers le bas, une pièce intermédiaire (34) étant placée sur sa face frontale, qui reçoit les forces latérales de l'unité de changement de vitesse et s'engage directement dans le cliquet (30), ou dans laquelle les plaques (31b) sont montées sur deux surfaces latérales de l'arbre de sortie (15) et sont fixées par une liaison dans les bagues de roulement (17) enfilées, dont les languettes reposent sur le dos de la partie arrière des cliquets (30a) et s'engagent dans une ouverture ronde, cette ouverture étant poussée vers le haut, servant de butée et maintenant la partie avant en position zéro.

7. Transmission selon l'une des exigences précédentes, dans laquelle l'arbre fileté (23) présente un filetage normal ou trapézoïdal (40) à la place du filetage à pas rapide, l'entraînement étant effectué par l'intermédiaire d'un réducteur (41) par un servomoteur électrique (42) qui est commandé par l'électronique via des contacts correspondants, un changement de vitesse pouvant en particulier également être effectué sur le guidon ou le volant en lieu d'un changement de vitesse au pied.

8. Transmission selon la revendication 7, dans laquelle un capteur de couple est installé et, en liaison avec l'électronique, un changement de vitesse automatique est également possible en option.
